# DEMANDE DE BREVET EUROPEEN

(11) **EP 0 636 514 A1**
(43) Date de publication de la demande: **01.02.1995**
(21) Numéro de dépôt: 94401674.0
(22) Date de dépôt: 21.07.1994
(51) Int. Cl.: B60Q 3/04, B60K 37/00

(54) **Tableau de bord à face avant unique et à cases à lumière**

(30) Priorité: 26.07.1993 FR 9309160
(71) Demandeur: SOCIETE D'APPLICATIONS GENERALES D'ELECTRICITE ET DE MECANIQUE SAGEM, F-75783 Paris Cédex 16 (FR)
(72) Inventeur: Giannitrapani, Serge, F-95000 Jouy le moutier (FR)
(74) Mandataire: Bloch, Gérard

(57) **Abrégé**

Le tableau de bord comporte une face avant unique (1) et des cases à lumière (19-22) pour l'éclairage de caractères (6) et symboles (5) sérigraphiés sur un masque (4) rapporté sur la paroi avant (3) de la face avant (1). La face avant (1) et les cases à lumière (19-22) sont formées d'une seule pièce, les cases à lumière (19-22) faisant saillie vers l'arrière.

L'invention s'applique bien aux tableaux de bord pour véhicule automobile.

## Description

Dans un tableau de bord, et plus particulièrement pour véhicule automobile, la pièce désignée sous l'appellation de façade ou, plus souvent, de face avant, est celle qui se trouve à l'avant de la boite à lumière et supporte, sur sa paroi avant, un ou des masques sérigraphiés représentant des témoins - d'essence, d'huile, par exemple -, des cadrans indicateurs, ou échelles, ou autres caractères associés à des mouvements, comme des compteurs et des jauges. Tous ces témoins et caractères doivent pouvoir être éclairés.

Le domaine de l'invention est celui des tableaux de bord à face avant unique. On connait des tableaux de bord à face avant unique formant quide de lumière. Ces tableaux de bord, s'ils permettent de s'affranchir des conduits de lumière, posent toutefois au moins deux problèmes : celui des entrées de lumière et celui de l'éclairage individuel des témoins et des groupes de caractères et donc le problème des dispersions de lumière intempestives.

Avant l'apparition des faces avant uniques, les tableaux de bord étaient constitués d'une pluralité de modules élémentaires, chacun avec une portion de face avant, une case à lumière, donc aussi individuelle, et un ou plusieurs conduits de lumière. C'est en partie à cause de ces conduits de lumière que les tableaux de bord à face avant unique ont été développés.

On connait aussi des tableaux de bord, classiques, comprenant une face avant avec des cases à lumière intégrées à la face avant, c'est-à-dire sorties du moule avec la face avant. Il en est ainsi du tableau de bord de FR-A-2672853. Mais il s'agit de cases à lumière en saillie vers l'avant hors du reste de la face avant, pour l'éclairage de témoins périphériques du tableau de bord sérigraphiés sur un ou des masques supportés par le réhaut d'habillage du tableau de bord.

Toujours pour s'affranchir des conduits de lumière, la demanderesse propose aujourd'hui un retour en arrière sur les cases à lumière mais tout en conservant l'unicité de la face avant.

La présente invention concerne donc un tableau de bord à face avant unique et à cases à lumière pour l'éclairage de caractères et symboles sérigraphiés sur au moins un masque rapporté sur la paroi avant de la face avant, caractérisé par le fait que la face avant et les cases à lumière sont formées d'une seule pièce, avec les cases à lumière en saillie vers l'arrière.

Le tableau de bord de l'invention est remarquable par le fait que tous les témoins, symboles et cadrans peuvent être éclairés par des cases à lumière arrière intégrées à la face avant, donc sans conduit de lumière. Il se distingue naturellement d'un tableau de bord modulaire, d'un tableau de bord à face avant unique formant guide de lumière et d'un tableau de bord à quelques cases à lumière avant et périphériques intégrées à une ou des portions de face avant.

Dans ces conditions, il est facile d'intégrer à la face avant au moins une case à lumière arrière d'éclairage d'une aiguille d'indicateur.

De même, on peut y intégrer également une case à lumière arrière d'éclairage d'un afficheur à cristaux liquides.

Avantageusement, les cases à lumière s'étendent à l'intérieur d'une boite à lumière d'une seule pièce avec les cases à lumière et la face avant.

Dans une forme de réalisation intéressante du tableau de bord de l'invention, il est prévu un réhaut formé d'une jupe périphérique d'habillage en saillie vers l'avant, d'une seuile pièce avec la face avant et les cases à lumière, et recevant une vitre de protection avant démontable.

L'invention sera mieux comprise à l'aide de la description de deux formes de réalisation du tableau de bord de l'invention, en référence au dessin annexé, sur lequel :
- la figure 1 représente une vue en coupe de la première forme de réalisation et
- la figure 2 représente une vue en coupe de la deuxième forme de réalisation, à réhaut intégré.

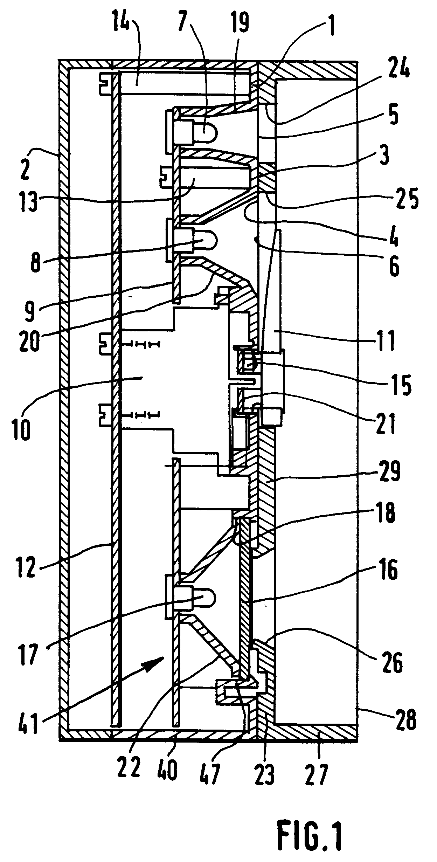

En référence à la figure 1, le tableau de bord comporte une face avant unique 1 prolongée par une paroi latérale 40 pour former une boite à lumière 41 de forme générale parallélipipédique, ouverte à l'arrière, mais fermée par un capot de protection 2. Sur la paroi avant 3 de la face avant 1 est plaqué un masque sérigraphié 4, en une ou plusieurs parties, représentant, dans des zones 5, 6, des caractères et symboles destinés à être éclairés. Plus précisément, un rayonnement lumineux est destiné à traverser des ouvertures ménagées par sérigraphie sur le masque et représentant ces caractères et symboles.

L'éclairage est obtenu par des sources de lumière, ici des lampes 7, 8, connectées à un premier circuit imprimé 9. La zone 5 comporte un témoin et, la zone 6, un cadran d'un mouvement indicateur 10 à aiguille 11. Le mouvement 10 est connecté à un deuxième circuit imprimé 12. Les circuits imprimés 9, 12 sont assujettis à la boite à lumière par des colonnettes 13, 14 fixées à l'arrière de la face avant 1.

L'aiguille 11 peut être éclairée par des diodes électroluminescentes 15. Un afficheur à cristaux liquides 16 peut aussi être éclairé par une lampe 17 connectée au premier circuit imprimé 9. L'afficheur 16 est fixé à la face avant 1 par encliquetage entre un ergot 47 et un épaulement 18 de la face avant 1.

Toutes les sources de lumière 7, 8, 15, 17, lampes classiques, lampes miniatures, diodes ou autres sources traditionnelles ou à monter en surface (CMS), sont disposées au fond de cases à lumière respectives 19-22, d'une seule pièce avec la face avant 1 et donc la boite à lumière 41 et en saillie vers l'arrière hors de la face avant 1. A part la case 21 d'éclairage de l'aiguille 11, les autres cases ont une forme générale tronconique évasée vers l'avant.

La face avant 1, en matière thermoplastique opaque et blanche, peut être en acrylonitrile-butadiène-styrène (ABS) ou en polypropylène (PP).

Le premier circuit imprimé 9 d'interconnexion des sources de lumière, rigide ou flexible, est également en appui contre les fonds des cases à lumière 19, 20, 22.

Un réhaut d'habillage 23, avec, dans son fond 29, des ouvertures 24-26 de passage du rayonnement lumineux des sources d'éclairage, est rapporté à l'avant de la face avant 1. Le réhaut 23 comporte une jupe périphérique avant 27 qui porte, à l'avant, une vitre de protection 28 fixée ici par soudure aux ultra-sons ou par vibrations.

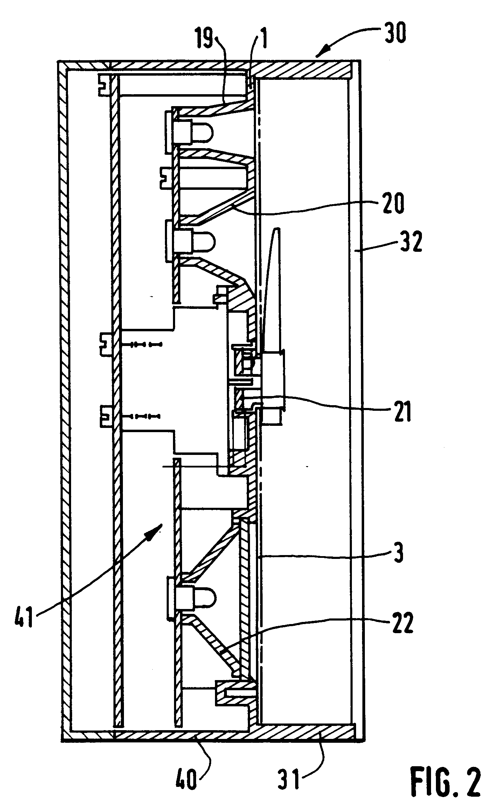

Le tableau de bord de la figure 2, pratiquement identique à celui de la figure 1, et les mêmes éléments sont donc associés aux mêmes références, s'en distingue toutefois par le réhaut d'habillage 30, sans fond, et avec une seule jupe périphérique 31 d'une seule pièce avec la face avant 1, les cases à lumière 19-22 et donc la boite à lumière 41, en saillie vers l'avant. En d'autres termes, la face avant 1 assure ici une double fonction supplémentaire de boîte à lumière et de réhaut. Le réhaut 30 est ouvert à l'avant et porte une vitre de protection démontable 32, fixée, par exemple, par vissage ou clipsage.

Dans l'exemple de la figure 2, le masque sérigraphié 3 est d'une seule pièce.

## Revendications

1. Tableau de bord à face avant unique (1) et à cases à lumière (19-22) pour l'éclairage de caractères (6) et symboles (5) sérigraphiés sur au moins un masque (4) rapporté sur la paroi avant (3) de la face avant (1), caractérisé par le fait que la face avant (1) et les cases à lumière (19-22) sont formées d'une seule pièce, avec les cases à lumière (19-22) en saillie vers l'arrière.

2. Tableau de bord selon la revendication 1, dans lequel il est prévu au moins une case à lumière arrière (20) d'éclairage d'une aiguille (11) d'indicateur (10).

3. Tableau de bord selon l'une des revendications 1 et 2, dans lequel il est prévu une case à lumière arrière (22) d'éclairage d'un afficheur à cristaux liquides (16).

4. Tableau de bord selon l'une des revendications 1 à 3, dans lequel la face avant (1) est prolongée par une paroi latérale (40) pour former une boite à lumière (41) d'une seule pièce avec la face avant (1) et les cases à lumière (19-22).

5. Tableau de bord selon l'une des revendications 1 à 4, dans lequel il est prévu un réhaut (30) formé d'une jupe périphérique d'habillage (31) en saillie vers l'avant, d'une seulle pièce avec la face avant (1) et les cases à lumière (19-22), et recevant une vitre de protection avant démontable (32).
